# EUROPEAN PATENT SPECIFICATION

(11) **EP 1 214 645 B1**
(45) Date of publication and mention of the grant of the patent: **05.11.2003**
(21) Application number: 00953341.5
(22) Date of filing: 16.08.2000
(51) Int. Cl.: G06F 9/45

(54) **METHOD AND SYSTEM FOR DISTRIBUTING OBJECT-ORIENTED COMPUTER PROGRAMS**
VERFAHREN UND SYSTEM ZUM VERTEILEN VON OBJEKTORIENTIERTEN RECHNERPROGRAMMEN
METHODE ET SYSTEME DE DISTRIBUTION DE LOGICIELS ORIENTES OBJET

(30) Priority: 01.09.1999 GB 9920676
(43) Date of publication of application: 19.06.2002
(73) Proprietor: TAO GROUP LIMITED, Earley, Reading RG6 1AZ (GB)
(72) Inventor: HINSLEY, Christopher, Andrew, Wokingham, Berkshire RG41 1NY (GB); RENOUF, Timothy, Newbury, Berkshire RG14 7QB (GB)
(74) Representative: Maggs, Michael Norman
(86) International application number: GB0003172
(87) International publication number: WO01016700

(56) References cited:
- EP-A- 0 463 583
- EP-A- 0 884 677
- EP-A- 0 905 617
- WO-A-99/31576
- BERTIL FOLLIOT ET AL: "Virtual Virtual Machines" CABERNET RADICALS WORKSHOP, 17 September 1997 (1997-09-17), XP002135231 Kreta
- BERTIL FOLLIOT ET AL: "A Dynamically Configurable, Multi-Language Execution Platform" SIGOPS EUROPEAN WORKSHOP, 1998, XP002135232

## Description

The invention relates generally to methods of and computer systems for translating (or translating and executing) object-oriented computer programs. More specifically, although not exclusively, the invention is concerned with object-oriented programs in which the code is provided in the form of class files.

A well known example of an object-oriented programming language is "Java" (a trade mark of Sun Microsystems Inc.). A "Java implementation" is a software system which allows a software application consisting of one or more class files to be run. These class files must conform to some version of the standard Java Virtual Machine Specification, as published by Sun Microsystems Inc. A class file defines the data and program code required for a particular class.

Although there is some interaction, the Java implementation can conceptually be divided into two parts:
- The Java Virtual Machine (JVM). This reads the class files and executes the instructions contained within them in a way which conforms to some version of Sun's Java Virtual Machine Specification. Some of the instructions contained within a class may reference the data or program code of other classes; the JVM also manages such relationships between classes.
- The Java Class Library. This is a set of predefined classes with data and program code which act in a way conforming to Sun's Java Class Library Specification. These library classes could be implemented in some way other than as real class files, for example using the C or assembler programming languages, in which case the JVM must ensure that references to their data and program code work in the same way as references to classes which originated from real class files.

The program code in a class file is in an instruction format known as Java bytecode (JBC), or simply as bytecode. Each method in the class has its own sequence of bytecode. The bytecode for a method consists of a sequence of JBC instructions.

There are two schemes which JVMs use to execute the bytecode:
- An interpreter. In this scheme, the JVM contains an interpreter, which is a piece of program code which executes the bytecode by looking at each JBC instruction in turn, decoding it, and performing the actions demanded by it. While this approach is the simplest to implement, its disadvantage is that it is slower than the alternative, since many steps of the interpreter program are required to interpret a single JBC instruction.
- A compiler. In this scheme, the JVM converts the JBC instructions of the bytecode into machine code instructions understood by the CPU being run on (native machine code), before any execution starts. Then, to execute the program code for a method, the compiled machine code is executed instead. There is a time overhead for the initial compilation from JBC instructions to machine code instructions, although this may be done during the preparation of the application rather than when the application is started. Once the compilation has been performed, the method's program code runs much faster, at a speed comparable with other traditionally compiled languages such as C. A special case of the compiler scheme is a just-in-time compiler (JIT), in which the bytecode for a class is compiled just before it is first used.

Some JVMs use a combination of the two schemes, where only program code which is being executed many times is compiled, and the rest is interpreted.

Linking is the process by which a reference from one class C1 to another class C2 (or data or a method in C2) is resolved. If C2 is not already loaded, it is loaded, and compiled if using the compiler scheme, and itself linked. Then the reference in C1 to C2 (or some item of data or a method in C2) is modified such that there is now a direct pointer to whatever in C2 is being referred to.

Sun's Java Virtual Machine Specification allows for a range of linking schemes:
- Static linking: The loading and linking of all classes of the application is performed when the application is prepared. This scheme is typically used when an application is embedded permanently in a device.
- Dynamic load time linking: Class C2 is loaded the first time another class is loaded which refers to C2 (or some data item or method within C2).
- Dynamic late binding: Class C2 is loaded the first time a JBC instruction (or its compiled equivalent) which refers to C2 (or some data item or method within C2) is executed.

In operation, when a particular method of a particular class is invoked, the particular class required may or may not already be resident in the JVM. If the required class is not resident, then the class file for that class must first be loaded from outside the JVM (for example from a disk or from a network), linked and initialised into the JVM. Then, the required method can be found by looking down the list of methods for the class. Once the required method has been found, the Java bytecode of that method is executed until a return is encountered, whereupon the method has ended and control is returned to the invoker of the method. A method invocation can also be terminated by an exception being thrown which is not caught in the method.

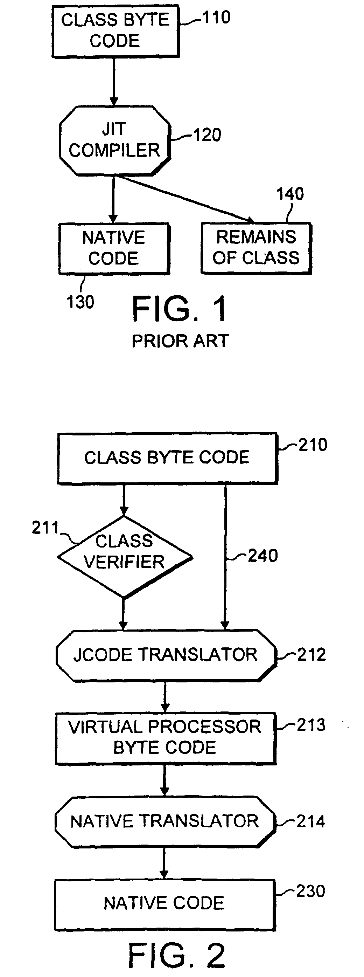

Figure 1 illustrates a typical prior art implementation in which the JVM makes use of a JIT compiler. The JIT compiler 120 takes the class bytecode 110, just before it is to be used, and translates it into native code 130 ready for execution on a specific processor. The remains of the class 140 (or possibly the entirety of the class) remains available in the memory in case the native code 130 should need to refer to it while running.

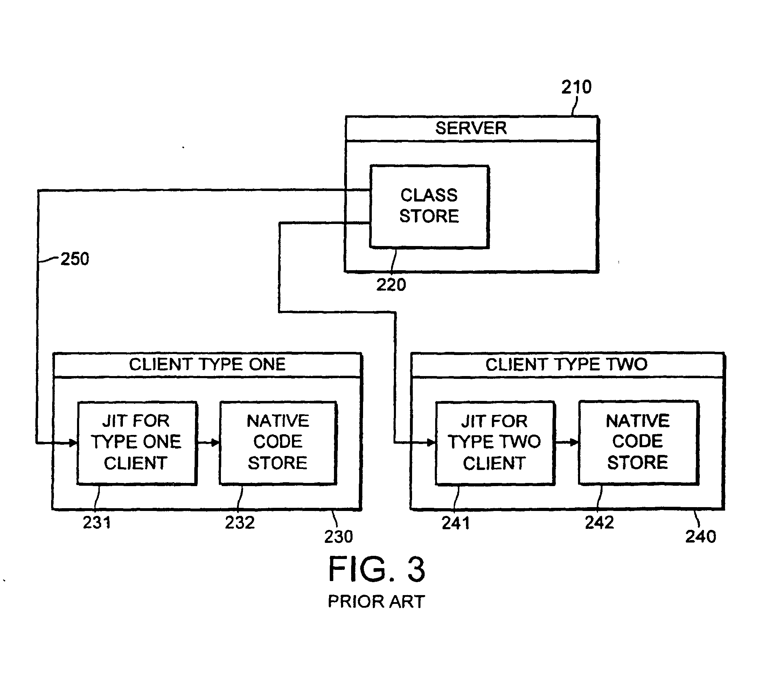

Figure 3 illustrates a typical prior art JVM implementation in a multiprocessor environment. A server 210 maintains a class store 220 for holding the bytecode of the various classes that may be required by the client processors 230, 240. In this example, the processors 230, 240 are of two different types - namely client type 1 and client type 2 respectively. The server supplies the class files, as necessary, across a communications network generally indicated at 250 to the clients 230, 240. Each of the clients 230, 240 maintains its own JIT, respectively 231, 241, enabling it to compile the class file to its own version of native code, and to store that in its own native code store 232, 242. The native code can then be run on the individual clients.

One problem with the above arrangement is that it requires a large execution environment on each of the clients. JIT compilers are typically large, and it can be difficult if not impossible to provide the requisite space on the client, particularly in an embedded system in which the client consists of, for example, a mobile phone. An alternative approach (not shown) would be to carry out the JIT compilation on the server, and to supply the clients with the native version of each class, as required. While this requires less space on each of the clients, it does have other disadvantages, namely substantial additional complexity at the server. Since each JIT is processor-dependent, the server would in such an arrangement have to maintain a different JIT for each processor type that might require to be served. While that might be possible in a fixed network, it is unrealistic in for example a mobile phone system where a large number of different phones, of different types and makes, are constantly being connected and disconnected to the server. The owners of the server would have the extremely difficult task of maintaining JITs for all known types of mobile phone, and maintaining and updating those JITs as new phones come onto the market. For that reason, it is preferable for the server simply to maintain a generic class store 220, and for the individual clients to undertake the processor-dependent translations. As mentioned above, however, that has proved difficult to implement in practice because of the limited memories available within embedded systems.

The closest prior art is EP-A-0913769 (SUN MICROSYSTEMS, Inc), disclosing downloading class files from a server to a client platform and executing the bytecode either directly by way of an interpreter or using a JIT. The relevant features are set out in the pre-characterising portions of the independent claims. A further prior art document is Bertil Folliot et al: "Virtual Virtual Machines", CABERNET RADICALS WORKSHOP, 17 September 1997, XP0002135231 Kreta.

It is an object of the present invention at least to alleviate some of the problems with the prior art, mentioned above.

According to a first aspect of the invention there is provided a method of translating an object-oriented computer program as set out in the characterising portion of claim 1. According to a second aspect of the invention, there is provided a distributed computer system as set out in the characterising portion of claim 19.

It will be understood, of course, that in the description and claims the word "code" includes data where that data is part of the program itself. Accordingly, but without limitation, the expression "code" includes such things as constants, variable names and types, flags, pointers, object names and so on.

In a preferred embodiment, the object-oriented computer program is written in Java (trademark of Sun Microsystems Inc.), and is designed to be implemented on a Java virtual machine (JVM).

Whether or not Java is used, however, the two-stage translation process of the present invention provides a first stage which is entirely platform-independent and a second stage which is platform-dependent. The Virtual Processor code which results from the first translation is machine-independent, and hence is completely portable. The work required in writing a new translator to translate the Virtual Processor code to a new platform is very significantly less than that which would be required to port the bytecode JIT to the new platform. Where Java is being used, new applications can be written directly in Java, by Java-experienced programmers, who need have no knowledge whatsoever of the Virtual Processor code. A new native translator for translating the Virtual Processor code into native code is needed not for every new application program, but only for every new platform on which the program is to be run. This results in significant time savings for the application programmers. It is envisaged that the native translators will be readily available for each common type of processor, so applications suppliers need only purchase the relevant translators for the processors on which their applications are designed to run; alternatively, the native translators could be supplied as standard with the end user machines themselves.

In one embodiment, the present invention is particularly useful where a common application is to be run on several networked processors. The translation from bytecode to Virtual Processor code may be undertaken on a central server, which may also provide verification of the Virtual Processor class files. Once the Virtual Processor code has been verified, it may be distributed to the individual client processors, either by way of a network broadcast or alternatively on demand. Each client processor maintains its own native translator which it uses to translate the received Virtual Processor code into its own particular variety of native code. The networked client devices may be heterogeneous, that is they may use different types of processor. That is not a problem in the preferred embodiment of the invention, since each client device will translate into the appropriate native code for its own type of processor.

With such an arrangement, the server need only maintain the virtual processor code. It need not know, or care about, which processors or processor types are being used on the networked client devices.

The present invention is expected to have particular application in the field of wireless communications, (wireless client networks), and specifically although not exclusively in the field of mobile cellular phone networks. In one preferred embodiment of the invention, the application software on each mobile phone will be automatically updated, in a way which is entirely user-transparent, by downloading the necessary updates in Virtual Processor code from the central server. The downloading could be at regular intervals, or on demand, or as necessary - for example when the user attempts for the first time to use some specific functionality which the phone has not yet been programmed to provide. A similar approach can be taken with other networked devices such as (without limitation) hand-held computers, games consoles, cameras, or indeed any other type of networked or networkable device. In one embodiment the network may consist of or include a wireless network, whereas in other embodiments it may include a private or public fixed network, or the Internet. Where the client devices are not capable of wireless communication, provision may be made for them to be coupled to the Internet as required (for example via a standard modem or ISDN link). In such a way, the invention could be applicable to a wide range of embedded devices, including for example cameras, televisions, washing machines, motor vehicles, or indeed virtually any other type of computer-operated device that can be conceived of.

The invention extends to a computer system for carrying out any of the described methods, and to a corresponding computer program whether or not embodied on a data carrier. The invention further extends to a data stream representative of a computer program for carrying out the described method.

The invention may be carried into practice in various ways and one specific embodiment will now be described, by way of example, with reference to the accompanying drawings, in which:
Figure 1 illustrates the operation of a conventional JIT compiler within a JVM;
Figure 2 illustrates the two-stage translation process of the preferred embodiment of the present invention;
Figure 3 shows a typical prior art client/server system;
Figure 4 illustrates the operation of the preferred embodiment of the invention within a client/server system;
Figure 5 illustrates the operation of the present invention within a wireless network; and
Figure 6 illustrates certain aspects of the translation from bytecode to intermediate virtual processor code according to the preferred embodiment of the invention.

Figure 1, which has been described above, shows the way in which a JIT compiler within a JVM translates from processor-independent bytecode to processor-dependent native code for running on a particular processor. In the present invention, conversion from bytecode to native code takes place in two separate stages:
1. Conversion from the class file to an intermediate processor-independent form. This will be referred to as Virtual Processor or VP code. The converter itself is known in the preferred implementation as the "jcode translator".
2. Conversion from the intermediate VP form to the native machine code.

The converter here will be known as the "native translator".

Figure 2 illustrates in more detail the translation from class bytecode to native code. The class byte code 210 is first checked for validity by a class verifier 211. This checks not only the individual bytes themselves, but also checks for valid external and internal references. The class verifier if necessary loads additional classes to check the external references.

Once the code has been checked, it is passed to the jcode translator 212 which converts it, as described in more detail below, into VP code 213. The VP code 213 is then converted by the native translator 214 to the native code 230.

It is important to appreciate that the class verifier 211, the jcode translator 212 and the VP code 213 are all processor-independent. It is only the native translator 214 and of course the final native code 230 which is processor-specific.

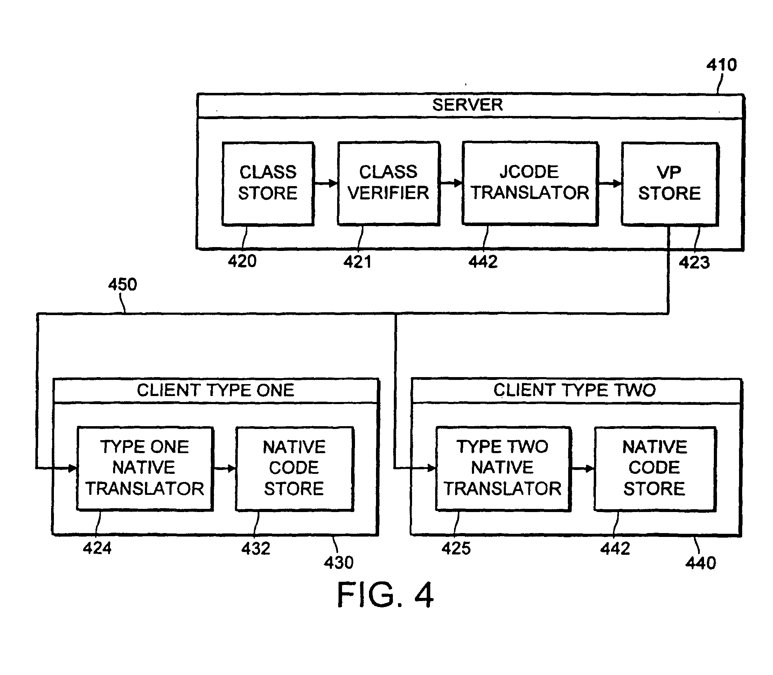

The use of the preferred embodiment within heterogeneous multiprocessor environment is shown schematically in Figure 4. This should be compared with the corresponding prior art approach shown in Figure 3.

In Figure 4, the server 410 is serving two clients 430, 440 (having different processors) via a communications network 450. All of the processor-independent calculation is carried out on the server; in particular, the server maintains a class store 420, a class verifier 421, a jcode translator 422 and a VP store 423. The VP (processor-independent) code can then be served, as required, across the network 450 to the individual clients. The VP code is then translated by the individual client translators 424, 425 and the appropriate native code for the specific processor stored within the native code stores 432, 442.

The use of VP on the server, as shown in Figure 4, allows the verification of the class files and the first stage of the compilation (the conversion to VP code) to be performed once only by the server. Then, only the native translation (which differs according to the processor type) needs to be performed by the client device before execution. Such an arrangement makes it easy to supply updated classes at the server, without the server needing to know anything about the details of the particular clients that will wish to make use of those classes. An updated class needs to be amended once only, in the class bytecode, and then translated once only into VP. The VP is transmitted to the client devices, as necessary, and the final translation to native code can be carried out at the client in a way which is entirely transparent to the end user. In addition, no amendment to the server or to the VP code is required in the event that a new type of client comes onto the market which requires different native code. The client manufacturer simply provides the client with an appropriate native translator, and the device should operate without any manual intervention at the server.

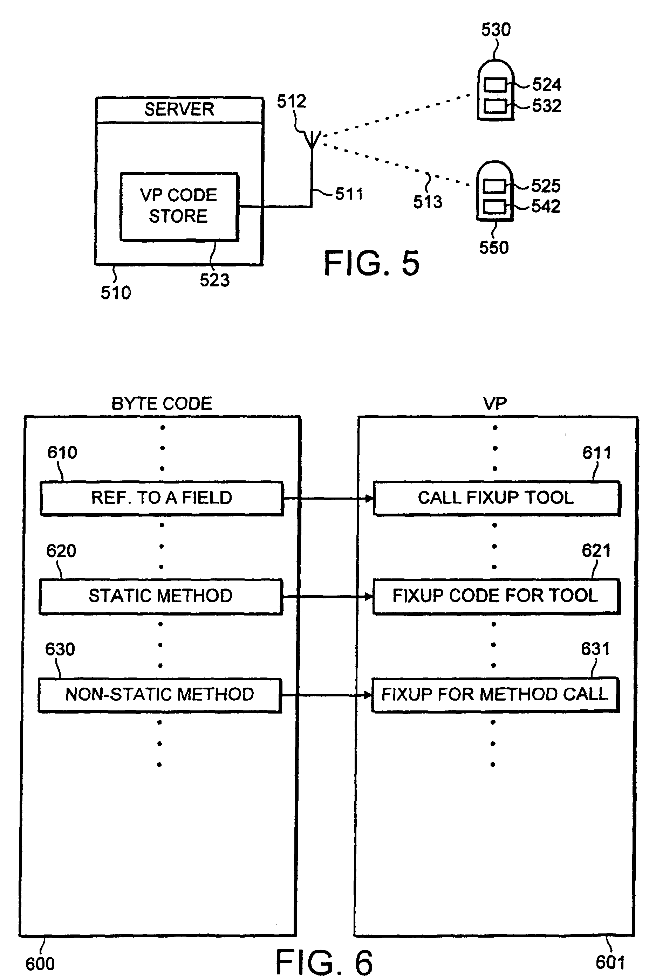

Once specific implementation, illustrated in Figure 5, is that of a mobile phone network. Individual mobile phones 530, 550 using the network each include a respective native translator 524, 525 and a native code store 532, 542. When it is required to upgrade the functionality of the phones, updated VP code is supplied from a VP store 523 on a central server 520. The updated VP code is sent via a land-based communications network 511 to a wireless transmitter 512. The code is then packetized and sent across a wireless link 513 to the individual phones. On receipt, the VP code is automatically translated into native and stored in the native code store. The whole process may be transparent to the phone user; or alternatively the updated code may be sent on receipt of a specific request from the phone user, via the wireless link 513.

Turning back now to Figure 2, further details will be given of the two-stage translation from class bytecode 210 into native code 230. As previously described, the class verifier 211 checks the class bytecode for validity. The class verifier may in some embodiments be incorporated within the jcode translator, in which case the class bytecode 210 is passed straight to the jcode translator 212 as shown by the arrow 240.

The JVM and the bytecode instructions it implements are stack based, which means that operands (numbers, pointers to objects) are kept on a stack, on which the last item to be pushed on is the first to be popped off. A bytecode instruction typically removes one or more operands from the stack, performs some action, and pushes the result operand (if any) back on the stack. On the other hand, VP is register based, in that it has a set of registers which are addressed directly by the VP instructions. An instruction typically takes its operand(s) from register(s) specified in the instruction, performs some action, and puts the result operand (if any) into a further register specified in the instruction. This register based architecture is more similar to most real processors, except that VP has a very large number of registers, large enough such that any system converting to VP does not need to worry about how many there are.

VP instructions are based around expressions. A single instruction typically has one or two operands, and each operand can be a constant, a register, or an expression. An expression then has one or two operands, each of which can be a constant, a register or an expression. In this way, an arbitrarily complex instruction can be built up.

There now follows a more detailed description of how parts of a class file are converted. The description uses the term "fixup"; this is a small item of data attached to a particular point in the compiler's output code or data which instructs the JVM that the code or data at that point needs to be modified in some way before it can be used. Fixups are used to change a native instruction or a data item such that the native code can obtain a direct reference to another class, or to a field or method therein.

A java class file consists of the following parts:
- A constant pool, which contains the constant numbers and names in other parts of the class file, instead of a name, there is a reference to a name which is stored here.
- Information such as the name of this class, the superclass and any direct superinterfaces.
- A list of fields, with information on each one.
- A list of methods, with information on each one. This information includes its code section. Thus there are several code sections, one for each method.

The Java class file is converted to VP tools as follows:
- A data tool. Despite its name, this has nothing to do with the data to be used by the class. Instead it contains information about a class, including but not limited to the names, parameters and types of all constructors, fields, methods and other entities which make up the API of a class. A typical use for this would be for reflection (i.e. the functionality in java.lang.reflect in a Java Library). Reflection is a programmatic interface to allow a programmer to enumerate and manipulate the constructors, fields, methods and other entities which belong to a class. The data tool is also used by the verifying jcode translators, in situations where either the class file is not available, or where the class file has already been translated. Where the class is written in VP, there is no class file anyway.
- A class tool. This contains some housekeeping information used by the JVM (including the size of object to allocate, the size of the class's static data if any, and the superclass and superinterfaces), and code for none, some or all of the methods.
- Zero or more method tools. Methods which do not appear in the class tool have their own individual tools. The decision on whether to place a method in its own tool can be based on a number of factors such as the size of the method.
- A fixup tool. The fixup tool typically returns a constant fixup value which is used to determine the offset within an object of a particular field. The tool is called at fixup time to provide the offset, and the binder/linker patches this offset into the code that wants to use it.. It is thus used to implement both "get a field" and "put a field" in the bytecode. More generally, the fixup tool returns data used for fixups. This can only be determined at fixup time and not at compile time. The data may include, but is not limited to, the size of a class instance and the offset within a class instance of a field.
   The data tool can be discarded if the java application is known not to use certain facilities (largely reflect), and the fixup tool can be discarded if the java application is to be embedded in a device which does not dynamically load further java classes.
   The jcode translator uses a VP register for each item on the stack.

VP code does not directly implement the class file's mechanisms for accessing another class, method or field from within the bytecode. In the bytecode there are instructions for, but not limited to, calling a method (in this or another class), getting the contents of a field (in this or another class), pushing a value onto the stack, popping a value off the stack and setting the contents of a field. The jcode translator converts these into VP instructions which may do one of the following (this is not an exhaustive list):
- Call a non-static method (i.e. one to which an object pointer must be passed) in a class. VP has the concept of a class with methods, which is used to implement Java classes. Such methods can be called virtually (the actual method called depends on the class of the object whose pointer is passed) or non-virtually (the method called is in the class specified in the call).
- Call a subroutine. This is used to implement the bytecode's call of a static method (i.e. one to which no object pointer need be passed), and in some cases a non-static method.
- Get the value of the constant fixup from the fixup tool.

The constant pool within a class file is converted as follows:
- A constant pool entry containing a constant number (integer or floating point) is incorporated into the compiled version of the JBC instruction which references the constant number.
- A constant pool entry containing string data which is used directly by a JBC instruction is copied into the data attached to the compiler's output code.
- Other constant pool entries containing string data are not used directly, but are used when referred to by the constant pool types below, or by other parts of the class file.
- A constant pool entry referencing a class C causes a fixup referencing the class C (or the JVM's internal name for the class) to be attached to the compiler's output code/data such that a JBC instruction using this constant pool entry to refer to C is compiled to a native code sequence which, after applying the fixup, obtains access to class C's code and data.
- A constant pool entry referencing a field F in a class C causes a fixup referencing F in C (or the JVM's internal name for F in C) to be attached to the compiler's output code/data such that a JBC instruction using this constant pool entry to refer to F is compiled to a native code sequence which, after applying the fixup, obtains access to field F.
- A constant pool entry referencing a method M in a class C causes a fixup referencing M in C (or the JVM's internal name for M in C) to be attached to the compiler's output code/data such that a JBC instruction using this constant pool entry to refer to M is compiled to a native code sequence which, after applying the fixup, obtains access to method M.
- A constant pool entry giving a name and type of a field or method is not used directly, but is used when referred to by other constant pool entry types or other parts of the class file.

The code section within a class file is converted as follows:
- Code doing purely numerical calculations (ie where there is no reference to an external method) is translated straight from bytecode into a corresponding tool in VP.
- As shown in Figure 6, where the bytecode 600 has a reference 610 to a field, that is converted at fixup time by a call 611 to the fixup tool. The call to the fixup tool returns a value which references the location of the field. Thus, by the time the instruction is run it has been patched to contain the correct offset.
- A static method 620 is converted to a corresponding VP tool, but with added fixup code 621.
- A non-static method 630 has added to it a fixup for a method call (ie a reference to the method name). This will eventually become an atom in the final native code.
- The calling conventions are rather different in bytecode and VP. In conventional bytecode such as Java bytecode, the parameters to be passed to a subroutine are placed on the stack, followed by a reference to the method to be called. A bytecode instruction to call a method is then executed which takes the method reference from the stack, resolves it and starts executing the new method with the parameters from the stack. Control is returned to original method when a return instructions is executed. This is converted to VP which loads all the parameters into VP registers before executing a gos (goto subroutine) instruction which has been fixed up to point to the destination method (this fixup may be statistically or dynamically bound). Execution is passed to the subroutine and returns when a 'ret' instruction is executed.

Other parts of the file are converted as follows:
- The name of the class determines the name used by the JVM to refer to the code and data output by the compiler.
- The name of the superclass becomes some reference to the superclass within the code and data output by the compiler. In the preferred implementation, the output data contains a pointer with a fixup attached such that, after linking, the pointer points to the superclass code and data.
- The name of each interface becomes some reference to the interface within the output code and data. In the preferred implementation, the output data contains a pointer for each interface with a fixup attached such that, after linking, the pointer points to the interface code and data.
- The debug information attached to each method (and the source filename which is stored in the class file), when present, is converted to a format suitable for the environment in which the JVM is running. In the preferred implementation, the debug information is converted to the same format used for non-Java parts of the system.

The final VP class comprises one or more named tools, normally including at least the data tool, the class tool, the fixup tool and zero or more method tools. The tool names are generated automatically by the jcode translator, each name being related to the name of the class and the function of each tool within the implementation of that class.

Turning back again to Figure 2, further details will now be given of the native translator which translates the VP code into native code. It will be understood, of course, that VP code is never itself run directly in a live application; it is always converted by the processor-dependent native translator into the appropriate native code for the processor on which it is to be executed.

The native translator 214 is quite a small piece of code (around 150k, depending upon the processor), so that it can easily be stored in memory within an embedded system. The translator 214 maps VP registers to the registers of the particular processor being used. The translator uses its knowledge of the real processor's register architecture to decide at each point in the output native code which VP registers should be mapped to the real processor's registers, and which should be kept in memory (which is slower to access). The translator also provides machine-dependent optimisation of instructions. Until the native code is bound in, it will still normally contain sections of fixup code. On binding (or sometimes at run-time) the fixup code will be replaced with appropriate machine-dependent instructions. For example, the fixup for a non-static method will be converted to an atom in the native code.

Both the jcode translator and the native translator are themselves preferably written in VP code and can thus be translated (using the native translator itself) to run on any desired platform. From that initial VP code, compiled versions of both translators may be provided in native code, optimized for the particular processor on which the translator is to execute. To compile the VP code for the jcode translator, that code is passed through the native translator. To compile the VP code for the native translator, that code is passed through the native translator itself.

Although the preferred embodiment uses the Java Virtual Machine, the overall inventive concept is more general, and it is not essential to use the JVM, or indeed Java at all. Where Java is used, however, the invention described allows Java-skilled applicators programmers to develop programs in their preferred language, without having to understand, or even to know anything about, VP code. The only requirement is that there may be a native code translator available for each physical processor on which the application is to be run. It is envisaged that such native translators will be generally available, and appropriate translators could either be purchased by the application developer or alternatively provided as standard on individual client devices such as mobile phones or games consoles.

## Claims

1. A method of distributing an object-oriented computer program **characterised by**:
(a) translating the program bytecode (210) into machine independent virtual processor code (213) which uses an instruction set of a virtual processor,
(b) transmitting the virtual processor code from a server (410) to a client device (430);
and
(c) translating the virtual processor code into native code (242) which uses an instruction set of a physical processor of the client device.

2. A method as claimed in claim 1 in which the program bytecode includes a class file, the class file being converted into one or more virtual processor tools which use the instruction set of the virtual processor.

3. A method as claimed in claim 2 in which the class file includes a plurality of methods, and which some or all the methods in the class file are converted to a respective virtual processor tool.

4. A method as claimed in claim 2 in which the class file includes a call to a method, and in which the virtual processor code provides a call to a corresponding tool.

5. A method as claimed in claim 2 in which the class file includes a reference to a field (610), and in which the virtual processor code provides a fixup tool (611) for use in locating the field.

6. A method as claimed in claim 5 in which the fixup tool is arranged to return a constant fixup value which is representative of the offset of the said field within an object.

7. A method as claimed in claim 6 including linking the virtual processor code and determining the constant fixup value in dependence upon virtual processor code which has been translated from another class file.

8. A method as claimed in claim 6 or claim 7 in which the fixup tool returns a value which is used to patch a method which gets or puts the value of a field.

9. A method as claimed in claim 2 in which the virtual processor code has, included within it at a plurality of points, fixup instructions which indicate that the code at the said points has to be modified by the respective fixup instruction prior to use.

10. A method as claimed in claim 7 in which the fixup instructions provide instructions as to how the native code can reference another class, or a field or method in another class.

11. A method as claimed in claim 9 or claim 10 in which the fixup instructions are transferred, substantially functionally unaltered, by the native translator into the native code; the fixup instructions being replaced with native instructions when the native code is bound on the said real physical processor.

12. A method as claimed in any one of claims 1 to 11 in which the bytecode is stack-based, and in which the virtual processor code is register-based.

13. A method of executing an object oriented computer program comprising translating the program into native code as claimed in any one of the preceding claims, and executing the native code on the physical processor.

14. A method as claimed in claim 13 when dependent upon claim 2 including binding the translated tools into a task, and executing the task in native code on the physical processor.

15. A method as claimed in any one of claims 1 to 12 which further includes:
(d) transmitting the virtual processor code from the server to a second client device (440);
and
(e) translating the virtual processor code into different native code which uses an instruction set of a physical processor of the second client device.

16. A method as claimed in claim 13 or claim 14 including executing the different native code on the physical processors of different client devices.

17. A distributed computer system comprising a server (410) and a plurality of remote client devices (430, 440) in communication with the server, each client device including a client processor; **characterised in that** the server includes a store for storing virtual processor code (423), said code being a machine-independent representation of an object oriented computer program using an instruction set of a virtual processor; and by a native translator (424, 425) arranged to translate the virtual processor code into native code which uses the instruction set of the respective client processor, and a native code store (432, 442); and **in that** the system includes transmission means (450) for transmitting the virtual processor code from the server to the client devices.

18. A distributed computer system as claimed in claim 17 in which the transmission means consists of or includes a wireless network (513).

19. A distributed computer system as claimed in claim 18 in which the client devices are mobile phones (530, 550).

20. A distributed computer system as claimed in claim 18 in which the client devices are hand-held computers.

21. A distributed computer system as claimed in claim 17 or claim 18 in which the client devices are hand-held games consoles.

22. A distributed computer system as claimed in claim 17 in which at least one of the client devices includes a first type of client processor and in which at least another of the client devices includes a second type of client processor, using a different instruction set from that of the first type.

23. A distributed computer system as claimed in any one of claims 17 to 22 in which the server is further arranged to translate the object-oriented computer program from bytecode into virtual processor code.

24. A method as claimed in any one of claims 2 to 11, or claim 12 when dependent upon claim 2, including verifying the integrity of the class bytecode, and of any external calls.

25. A method as claimed in any one of claims 2 to 11, or claim 12 when dependent upon claim 2, in which the class file is a Java class file.

26. A method as claimed in any one of claims 1 to 12, 24 or 25 in which the step of translating the program bytecode into virtual processor code is carried out by a first translator program which is itself written in virtual processor code.

27. A method as claimed in any one claims 1 to 12, 24, 25 or 26, in which the step of translating the virtual processor code into native code is carried out by a second translator program which is itself written in virtual processor code.

28. A computer program for executing a method as claimed in any one of claims 1 to 12 or 24 to 27.

29. A data carrier which carries a computer program for executing a method as claimed in any one of claims 1 to 12 or 24 to 27.

30. A data stream representative of a computer program for executing a method as claimed in any one of claims 1 to 12 or 24 to 27.

## Patentansprüche

1. Verfahren zum Verteilen eines objektorientierten Rechnerprogramms, **dadurch gekennzeichnet, dass**:
(a) der Programm-Bytecode (210) in einen maschinenunabhängigen Code (213) eines virtuellen Prozessors übersetzt wird, der eine Befehlsgruppe eines virtuellen Prozessors verwendet;
(b) der Code des virtuellen Prozessors von einem Server (410) zu einem Client-Gerät (430) übertragen wird;
und
(c) der Code des virtuellen Prozessors in nativen Code (242) übersetzt wird, der einen Befehlssatz eines physikalischen Prozessors des Client-Geräts verwendet.

2. Verfahren nach Anspruch 1, wobei der Programm-Bytecode eine Klassendatei aufweist, wobei die Klassendatei in ein oder mehrere virtuelle Prozessorwerkzeuge umgewandelt wird, welche den Befehlssatz des virtuellen Prozessors verwenden.

3. Verfahren nach Anspruch 2, wobei die Klassendatei eine Vielzahl an Verfahren aufweist, und wobei einige oder alle dieser Verfahren in der Klassendatei in ein jeweiliges Werkzeug des virtuellen Prozessors umgewandelt werden.

4. Verfahren nach Anspruch 2, wobei die Klassendatei einen Aufruf an ein Verfahren enthält, und wobei der virtuelle Prozessorcode einen Aufruf an ein entsprechendes Werkzeug zur Verfügung stellt.

5. Verfahren nach Anspruch 2, wobei die Klassendatei einen Verweis auf ein Feld (610) enthält, und wobei der virtuelle Prozessorcode ein Korrekturwerkzeug (611) für die Suche des Feldes zur Verfügung stellt.

6. Verfahren nach Anspruch 5, wobei das Korrekturwerkzeug so angeordnet ist, dass es einen konstanten Korrekturwert zurückgibt, der repräsentativ für die Verschiebung des Feldes innerhalb eines Objektes ist.

7. Verfahren nach Anspruch 6, welches das Verknüpfen des virtuellen Prozessorcodes und des Bestimmens des konstanten Korrekturwertes abhängig vom virtuellen Prozessorcode einschließt, der von einer anderen Klassendatei übersetzt wurde.

8. Verfahren nach Anspruch 6 oder Anspruch 7, wobei das Korrekturwerkzeug einen Wert zurückgibt, der verwendet wird, um ein Verfahren zu ändern, welches den Wert eines Feldes holt oder eingibt.

9. Verfahren nach Anspruch 2, wobei an einer Vielzahl von Punkten innerhalb des Codes des virtuellen Prozessors Korrekturbefehle enthalten sind, welche angeben, dass der Code an diesen Punkten vor der Verwendung vom jeweiligen Korrekturbefehl verändert werden muss.

10. Verfahren nach Anspruch 7, wobei die Korrekturbefehle Befehle zur Verfügung stellen, welche angeben, wie der native Code auf eine andere Klasse oder ein Feld oder ein Verfahren in einer anderen Klasse referenzieren kann.

11. Verfahren nach Anspruch 9 oder Anspruch 10, wobei die Korrekturbefehle im wesentlichen funktionell unverändert vom nativen Übersetzer in den nativen Code übertragen werden, wobei die Korrekturbefehle durch native Befehle ersetzt werden, wenn der native Code am echten physikalischen Prozessor angebunden ist.

12. Verfahren nach einem der Ansprüche 1 bis 11, wobei der Bytecode auf Stapeln basiert, und wobei der Code des virtuellen Prozessors auf Registern basiert.

13. Verfahren zur Ausführung eines objektorientierten Computerprogramms, welches das Übersetzen des Programms in nativen Code nach einem der vorhergehenden Ansprüche und das Ausführen des nativen Codes am physikalischen Prozessor aufweist.

14. Verfahren nach Anspruch 13, in Abhängigkeit von Anspruch 2 wobei das Anbinden der übersetzten Werkzeuge an einen Task und das Ausführen des Tasks in nativem Code am physikalischen Prozessor eingeschlossen ist.

15. Verfahren nach einem der Ansprüche 1 bis 12, welches weiter aufweist:
(d) Übertragen des Codes des virtuellen Prozessors vom Server auf ein zweites Client-Gerät (440);
und
(e) Übersetzen des Codes des virtuellen Prozessors in unterschiedlichen nativen Code, der einen Befehlssatz eines physikalischen Prozessors des zweiten Client-Geräts verwendet.

16. Verfahren nach Anspruch 13 oder Anspruch 14, welches das Ausführen des unterschiedlichen nativen Codes auf den physikalischen Prozessoren der unterschiedlichen Client-Geräte umfaßt.

17. Verteiltes Computersystem mit einem Server (410) und einer Vielzahl an dezentralen Client-Geräten (430, 440), die mit dem Server in Kommunikationsverbindung stehen, wobei jedes der Client-Geräte einen Client-Prozessor aufweist, **dadurch gekennzeichnet, dass** der Server einen Speicher zum Speichern des virtuellen Prozessorcodes (423) aufweist, wobei es sich bei dem Code um eine maschinenunabhängige Darstellung eines objektorientierten Computerprogramms handelt, das einen Befehlssatz eines virtuellen Prozessors verwendet; und dass ein nativer Übersetzer (424, 425) vorgesehen ist, um den virtuellen Prozessorcode in nativen Code zu übersetzen, welcher den Befehlssatz des jeweiligen Client-Prozessors verwendet, und einen Speicher (432, 442) für den nativen Code; und dass das System Übertragungsmittel (450) zum Übertragen des Codes des virtuellen Prozessors vom Server zu den Client-Geräten aufweist.

18. Verteiltes Computersystem nach Anspruch 17, wobei das Übertragungsmittel aus einem kabellosen Netzwerk (513) besteht oder dieses enthält.

19. Verteiltes Computersystem nach Anspruch 18, wobei es sich bei den Client-Geräten um Mobiltelefone (530, 550) handelt.

20. Verteiltes Computersystem nach Anspruch 18, wobei es sich bei den Client-Geräten um tragbare Computer handelt.

21. Verteiltes Computersystem nach Anspruch 17 oder Anspruch 18, wobei es sich bei den Client-Geräten um mobile Spielekonsolen handelt.

22. Verteiltes Computersystem nach Anspruch 17, wobei mindestens eines der Client-Geräte eine erste Art von Client-Prozessor aufweist und wobei mindestens ein anderes der Client-Geräte eine zweite Art von Client-Prozessor aufweist, welches jedoch eine andere Befehlsgruppe verwendet als die erste Art.

23. Verteiltes Computersystem nach einem der Ansprüche 17 bis 22, wobei der Server weiters zum Übersetzen des objektorientierten Computerprogrammes vom Bytecode in den Code des virtuellen Prozessors vorgesehen ist.

24. Verfahren nach einem der Ansprüche 2 bis 11, oder Anspruch 12 in Abhängigkeit von Anspruch 2, welches das Überprüfen der Integrität des Klassen-Bytecodes und eventueller externer Aufrufe einschließt.

25. Verfahren nach einem der Ansprüche 2 bis 11, oder Anspruch 12 in Abhängigkeit von Anspruch 2, wobei es sich bei der Klassendatei um eine Java-Klassendatei handelt.

26. Verfahren nach einem der Ansprüche 1 bis 12, 24 oder 25, wobei der Schritt des Übersetzens des Programm-Bytecodes in den Code des virtuellen Prozessors von einem ersten Übersetzerprogramm ausgeführt wird, welches selbst im Code des virtuellen Prozessors geschrieben ist.

27. Verfahren nach einem der Ansprüche 1 bis 12, 24, 25 oder 26, wobei der Schritt des Übersetzens des Codes des virtuellen Prozessors in nativen Code von einem zweiten Übersetzerprogramm ausgeführt wird, welches selbst im Code des virtuellen Prozessors geschrieben ist.

28. Computerprogramm zur Ausführung eines Verfahrens nach einem der Ansprüche 1 bis 12 oder 24 bis 27.

29. Datenträger, der ein Computerprogramm zur Ausführung eines Verfahrens nach einem der Ansprüche 1 bis 12 oder 24 bis 27 trägt.

30. Datenstrom, der für ein Computerprogramm für die Ausführung eines Verfahrens nach einem der Ansprüche 1 bis 12 oder 24 bis 27 repräsentativ ausführt.

## Revendications

1. Procédé de distribution d'un programme informatique orienté objet **caractérisé par**:
(a) la traduction du programme en pseudocode (bytecode) (210) en code processeur virtuel non lié à un type de machine particulier (213) qui utilise un jeu d'instructions d'un processeur virtuel ;
(b) la transmission du code processeur virtuel d'un serveur (410) à un dispositif client (430), et
(c) la traduction du code processeur virtuel en code natif (242) qui utilise un jeu d'instructions d'un processeur physique du dispositif client.

2. Procédé suivant la revendication 1 dans lequel le programme en pseudocode comprend un fichier de classe, le fichier de classe étant converti en un ou plusieurs outils processeur virtuel qui utilisent le jeu d'instructions du processeur virtuel.

3. Procédé suivant la revendication 2 dans lequel le fichier de classe comprend une pluralité de méthodes, et dans lequel une partie ou l'ensemble des méthodes dans le fichier de classe sont converties en un outil processeur virtuel respectif.

4. Procédé suivant la revendication 2 dans lequel le fichier de classe comprend un appel à une méthode, et dans lequel le code processeur virtuel fournit un appel à un outil correspondant.

5. Procédé suivant la revendication 2 dans lequel le fichier de classe comprend une référence à un champ (610), et dans lequel le code processeur virtuel fournit un outil de correction (611) à utiliser pour trouver le champ.

6. Procédé suivant la revendication 5, dans lequel l'outil de correction est propre à renvoyer une valeur de correction constante qui est représentative du décalage dudit champ dans un objet.

7. Procédé suivant la revendication 6 comprenant la liaison du code processeur virtuel et la détermination de la valeur de correction constante en fonction du code processeur virtuel qui a été traduit d'un autre fichier de classe.

8. Procédé suivant la revendication 6 ou 7 dans lequel l'outil de correction renvoie une valeur qui est utilisée pour corriger une méthode qui obtient ou place la valeur d'un champ.

9. Procédé suivant la revendication 2 dans lequel le code processeur virtuel comprend, incluses dans celui-ci en une pluralité de points, des instructions de correction qui indiquent que le code auxdits points doit être modifié par l'instruction de réparation respective avant utilisation.

10. Procédé suivant la revendication 7 dans lequel les instructions de réparation fournissent des instructions quant à la manière dont le code natif peut faire référence à une autre classe, ou à un champ ou une méthode dans une autre classe.

11. Procédé suivant la revendication 9 ou 10 dans lequel les instructions de réparation sont transférées, sensiblement inchangées sur le plan fonctionnel, par le traducteur natif en code natif ; les instructions de réparation étant remplacées par des instructions natives lorsque le code natif est lié audit processeur physique réel.

12. Procédé suivant l'une quelconque des revendications 1 à 11 dans lequel le pseudocode est basé sur une pile, et dans lequel le code processeur virtuel est basé sur un registre.

13. Procédé d'exécution d'un programme informatique orienté objet comprenant la traduction du programme en code natif suivant l'une quelconque des revendications précédentes, et l'exécution du code natif sur le processeur physique.

14. Procédé suivant la revendication 13 lorsqu'elle dépend de la revendication 2 comprenant la liaison des outils traduits en une tâche, et l'exécution de la tâche en code natif sur le processeur physique.

15. Procédé suivant l'une quelconque des revendications 1 à 12 qui comprend en outre:
(d) la transmission du code processeur virtuel du serveur à un deuxième dispositif client (440), et
(e) la traduction du code processeur virtuel en un code natif différent qui utilise un jeu d'instructions d'un processeur physique du deuxième dispositif client.

16. Procédé suivant la revendication 13 ou 14 comprenant l'exécution du code natif différent sur les processeurs physiques de dispositifs clients différents.

17. Système informatique réparti comprenant un serveur (410) et une pluralité de dispositifs clients distants (430, 440) en communication avec le serveur, chaque dispositif client comprenant un processeur client ; **caractérisé en ce que** le serveur comprend une mémoire pour stocker du code processeur virtuel (423), ledit code étant une représentation non liée à un type de machine particulier d'un programme informatique orienté objet utilisant un jeu d'instructions d'un processeur virtuel ; et par un traducteur natif (424, 425) propre à traduire le code processeur virtuel en code natif qui utilise le jeu d'instructions du processeur client respectif, et une mémoire de code natif (432, 442); et **en ce que** le système comprend un moyen de transmission (450) pour transmettre le code processeur virtuel du serveur aux dispositifs clients.

18. Système informatique réparti suivant la revendication 17 dans lequel le moyen de transmission est composé d'un ou comprend un réseau sans fil (513).

19. Système informatique réparti suivant la revendication 18 dans lequel les dispositifs clients sont des téléphones mobiles (530, 550).

20. Système informatique réparti suivant la revendication 18 dans lequel les dispositifs clients sont des ordinateurs portatifs.

21. Système informatique réparti suivant la revendication 17 ou 18 dans lequel les dispositifs clients sont des consoles de jeu portatives.

22. Système informatique réparti suivant la revendication 17 dans lequel au moins un des dispositifs clients comprend un premier type de processeur client et dans lequel au moins un autre des dispositifs clients comprend un deuxième type de processeur client utilisant un jeu d'instructions différent de celui du premier type.

23. Système informatique réparti suivant l'une quelconque des revendications 17 à 22 dans lequel le serveur est en outre propre à traduire le programme informatique orienté objet de pseudocode en code processeur virtuel.

24. Procédé suivant l'une quelconque des revendications 2 à 11 ou la revendication 12 lorsqu'elle dépend de la revendication 2 comprenant la vérification de l'intégrité de la classe en pseudocode, et d'appels externes quelconques.

25. Procédé suivant l'une quelconque des revendications 2- à 11 ou la revendication 12 lorsqu'elle dépend de la revendication 2 dans lequel le fichier de classe est un fichier de classe Java.

26. Procédé suivant l'une quelconque des revendications 1 à 12, 24 ou 25 dans lequel l'étape de traduction du programme en pseudocode en code processeur virtuel est exécutée par un premier programme traducteur qui est lui-même écrit en code processeur virtuel.

27. Procédé suivant l'une quelconque des revendications 1 à 12, 24, 25 ou 26 dans lequel l'étape de traduction du code processeur virtuel en code natif est exécutée par un deuxième programme traducteur qui est lui-même écrit en code processeur virtuel.

28. Programme informatique pour exécuter un procédé suivant l'une quelconque des revendications 1 à 12 ou 24 à 27.

29. Support de données qui reçoit un programme informatique pour exécuter un procédé suivant l'une quelconque des revendications 1 à 12 ou 24 à 27.

30. Flux de données représentatif d'un programme informatique pour exécuter un procédé suivant l'une quelconque des revendications 1 à 12 ou 24 à 27.
